# EUROPÄISCHE PATENTSCHRIFT

(11) **EP 3 183 167 B1**
(45) Veröffentlichungstag und Bekanntmachung des Hinweises auf die Patenterteilung: **03.10.2018**
(21) Anmeldenummer: 15732207.4
(22) Anmeldetag: 23.06.2015
(51) Int. Cl.: B62M 6/50, B62J 27/00

(54) **VERFAHREN UND VORRICHTUNG ZUR STURZVERHINDERUNG EINES FAHRRADFAHRERS**
METHOD AND DEVICE FOR PREVENTING A CYCLIST FROM FALLING
PROCÉDÉ ET DISPOSITIF ANTICHUTE D'UN CYCLISTE

(30) Priorität: 21.08.2014 DE 102014216671
(43) Veröffentlichungstag der Anmeldung: 28.06.2017
(73) Patentinhaber: Robert Bosch GmbH, 70442 Stuttgart (DE)
(72) Erfinder: GERSTENKORN, Johannes Alex, 10178 Berlin (DE); SCHUMACHER, Christoph, 72144 Dusslingen (DE)
(86) Internationale Anmeldenummer: PCT/EP2015/064034
(87) Internationale Veröffentlichungsnummer: WO 2016/026599

(56) Entgegenhaltungen:
- DE-A1-102008 019 469
- DE-A1-102010 003 951
- DE-A1-102010 028 645
- DE-A1-102012 009 203

## Beschreibung

Die Erfindung betrifft ein Verfahren, beansprucht im Anspruch 1, und eine Vorrichtung, beansprucht im Anspruch 7, zur Erkennung eines Sturzes bei einem Zweirad und zur Einleitung von Gegenmaßnahmen.

### Stand der Technik

Während der Fahrt mit einem Zweirad können Verkehrssituation eintreten, in denen das hintere Rad vom Boden abhebt. So besteht beispielsweise bei einer scharfen Bremsung alleine mit der Vorderradbremse eines Fahrrads die Gefahr, dass sich der Fahrer über die Lenkstange überschlägt. Darüber hinaus können jedoch auch bei mehr oder weniger gewollten Sprüngen Gewichtsverlagerungen ergeben, beispielsweise über Bordsteine, die zu einem Überschlag nach vorne oder nach hinten führen. Besonders sind dabei Fahrradfahrer gefährdet, die mit Mountainbikes im Gelände unterwegs sind.

Zur Erkennung eines Überrollens bzw. Überschlagens eines Fahrzeugs ist beispielsweise aus der DE 102 42 687 A1 bekannt, dieses Fahrzeugs mit verschiedenen Sensoren auszustatten. So kann beispielsweise über die Luftdruckerfassung an zwei Sensoren, die eine vertikale Differenz aufweisen, eine Drehbewegung des Fahrzeugs erkannt werden.

Darüber hinaus ist jedoch auch bekannt, mittels eines Gierraten- und/oder Beschleunigungssensors Drehbewegungen der Hochachse von Fahrzeugen zu erfassen, beispielsweise im Rahmen eines ESP-Systems.

Die DE-A-10 2008 019469 offenbart die vorkennzeichnenden Merkmale des Anspruchs 7, und die hiermit übereinstimmenden Merkmale des Anspruchs 1.

### Offenbarung der Erfindung

Die Erfindung beansprucht ein Verfahren sowie eine Vorrichtung zur Anwendung an einem Zweirad, insbesondere an einem zumindest teilweise elektrisch antreibbaren Fahrrad. Dabei wird zunächst das Abheben wenigstens eines Rades erfasst und daraus, gegebenenfalls unter Hinzufügung weiterer Sensorsignale, auf einen Sprung geschlossen. Anschließend wird die Gefahr berechnet, dass es bei diesem Sprung zu einem Überschlag, z.B. über den Lenker oder nach hinten, kommt. Sollte dies der Fall sein, wird auf das wenigstens eine abhebende Rad derart eingewirkt, dass ein Gegendrehmoment erzeugt wird, welches der Drehbewegung, die zum Überschlag führt, entgegenwirkt.

Durch die Erzeugung des Gegendrehmoments kann rechtzeitig durch die am Fahrrad befindlichen Komponenten ein Sturz verhindert oder zumindest in ihren Auswirkungen vermindert werden.

Das Gegendrehmoment kann beispielsweise durch die Ansteuerung eines elektrischen Antriebs erfolgen, welches an dem abhebenden Rad eine Drehbewegung erzeugt. Die Richtung dieser Drehbewegung ist dabei davon abhängig, ob ein Überschlag über den Lenker oder ein Fall in der Rückenlage nach hinten prognostiziert wird. So wird beispielsweise bei einem erkannten Überschlag über den Lenker ein Beschleunigungsimpuls an den Antrieb geleitet, um das Zweirad zu stabilisieren, d.h. die Drehbewegung des Zweirads zu kompensieren oder zu verringern.

Alternativ kann auch vorgesehen sein, dass der bereits vorliegende Antrieb des abgehobenen Rades reduziert oder abgeschalten wird, um so eine Bremswirkung zu erzielen. Dieser Vorgang reduziert das während des Sprungs noch vorhandene Drehmoment, wodurch die Drehung des Zweirads ebenfalls reduziert wird.

Falls das Zweirad jedoch keinen Antrieb aufweist oder dieser nicht zur Verfügung steht oder verwendet werden soll, kann zur Kompensation der Drehbewegung auch eine Bremsvorrichtung an dem abhebenden Rad aktiviert werden, um das Drehmoment, welches die Drehbewegung des Zweirads erzeugt und/oder unterstützt, zu reduzieren oder abzubauen.

Vorteilhafterweise wird der Sprung, das Abheben des wenigstens einen Rades und/oder die Überschlagsneigung bzw. Überschlagsgefahr mit wenigstens einem Sensor erfasst, der an dem Zweirad montiert ist. So kann beispielsweise mit einem Beschleunigungssensor, einem Drucksensor, einem Neigungs- und/oder Lagesensor oder einem Gierratensensor eine Drehung des Zweirads um seine Querachse erkannt werden. Darüber hinaus können auch zwei Sensorsignale verwendet werden, um eine schnellere und genauere Detektion des Sprungs bzw. des Abhebens bzw. der Überschlagsneigung zu erfassen. Weiterhin können auch unterschiedliche Sensoren für die Erfassung des Sprungs bzw. des Abhebens und der Überschlagsneigung verwendet werden.

Weiterhin kann vorgesehen sein, dass das Gegendrehmoment beim abhebenden Rad nur dann erzeugt wird, wenn die Überschlagsneigung bzw. die Drehung des Zweirads um die Querachse einen bestimmten Schwellenwert übersteigt. Dabei kann die Überschlagsneigung bzw. die Drehung in Form einer Beschleunigung, einer Gierrate und/oder einer kritischen Neigung bzw. Neigungssänderung erfasst werden. Der Schwellenwert kann dabei so gesetzt werden, dass ab diesem Wert von einem Sturz ausgegangen werden muss, z.B. indem eine kritische Neigung überschritten oder nicht davon ausgegangen werden kann, dass die Drehbewegung vor einem Überschlag nach vorne oder hinten beendet wird. Selbstverständlich kann dieser Schwellenwert auch dazu verwendet werden, das Drehmoment des abhebenden Rades, welches die Drehung und somit die Überschlagsneigung unterstützt, unter diesen Wert zu reduzieren oder abzubauen.

Das Verfahren bzw. die Vorrichtung wird vorteilhafterweise bei einem zumindest teilweise elektrisch antreibbaren Fahrrad eingesetzt. Dabei ist insbesondere vorgesehen, dass der Antrieb des Fahrrads auf das Hinterrad wirkt, so dass bei einem Sprung das Drehmoment des Hinterrads erhöht und/oder bei der Nutzung einer Bremswirkung auch reduziert oder abgebaut wird. Durch die zusätzliche Erzeugung bzw. die Erhöhung des Drehmoments kann ein Drehimpuls am Hinterrad erzeugt werden, der der Drehung des Fahrrads um die Querachse entgegen wirkt und somit die Gefahr eines Sturzes aufgrund des Überschlagens nach vorne oder hinten reduziert.

Weitere Vorteile ergeben sich aus der nachfolgenden Beschreibung von Ausführungsbeispielen bzw. aus den abhängigen Patentansprüchen.

### Kurze Beschreibung der Zeichnungen

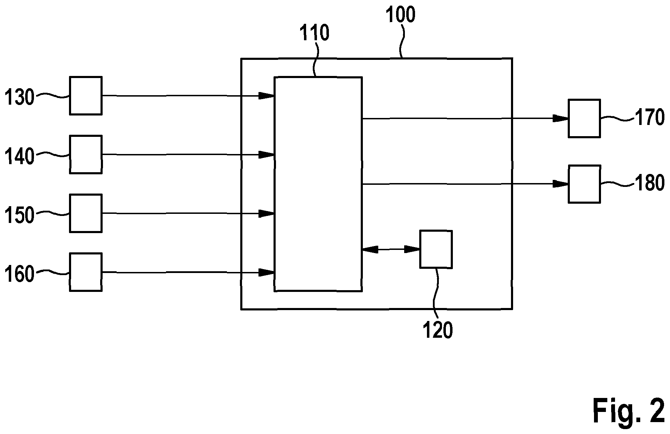

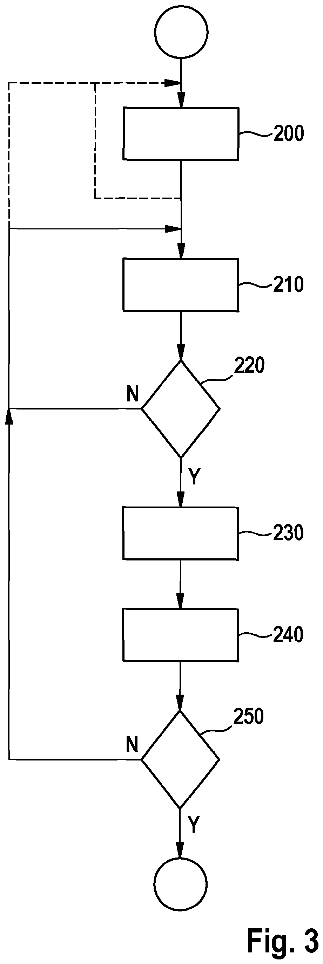

In den Figuren la bis c werden verschiedene mögliche Situationen bei einem Sprung mit einem Zweirad in Form eines Fahrrads gezeigt. Die Figur 2 zeigt eine Ausführungsform der erfindungsgemäßen Vorrichtung in Form eines Blockschaltbildes. Mit der Figur 3 wird anhand eines Flussdiagramms eine Ausführungsform des erfindungsgemäßen Verfahrens beschrieben.

### Ausführungsbeispiel

In den folgenden Ausführungsbeispielen wird die vorliegende Erfindung in der Verwendung an einem Fahrrad beschrieben, insbesondere mit einem elektrischen Antrieb. Dieser elektrische Antrieb soll in den nachfolgenden Ausführungen auf das Hinterrad wirken, wobei durchaus auch eine Wirkung auf das Vorderrad denkbar ist. Darüber hinaus sei jedoch klargestellt, dass die Erfindung sinngemäß auch an jedem anderen Zweirad verwendet werden kann, bei dem ein Antriebsmittel ein Drehmoment auf eines der Räder erzeugen kann oder bei dem eine Bremsvorrichtung das Drehmoment an einem der Räder reduzieren oder abbauen kann.

In der Figur la wird eine beispielhafte Fahrsituation eines Fahrradfahrers bei einem Sprung über eine Rampe dargestellt. Derartige Situationen können beispielsweise am Bordstein oder abgewandelt beim Downhill fahren vorkommen. Wie anhand der Figur la zu erkennen ist, kann bei einem Sprung eine Drehbwegung erzeugt werden, die dazu führt, dass der Fahrer nach hinten überkippt und stürzt. Dieser rückwärtige Überschlag kann dabei durch eine ungünstige Gewichtsverteilung am Fahrrad noch weiter gefördert werden, indem beispielsweise auf dem Gepäckträger Taschen oder anderes Gewicht vorhanden ist. Entsprechend kann der Fahrradfahrer auch nach vorne kippen und einen Überschlag über den Lenker machen, insbesondere wenn sich der Fahrer nach vorne beugt.

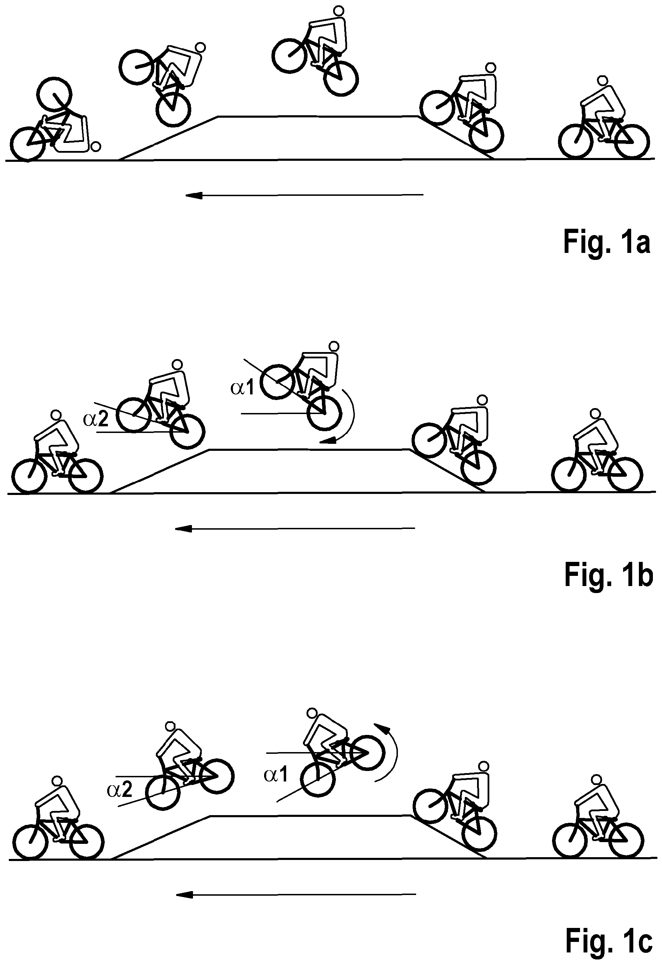

Durch das erfindungsgemäße Verfahren wird, wie anhand der Figur 1b gezeigt, zunächst erkannt, dass ein Sprung vorliegt. In diesem dargestellten Beispiel sind beide Räder von der Fahrbahn abgehoben, so dass sich das Fahrrad wenigstens teilweise im Freiflug in der Luft befindet. Es ist jedoch auch möglich, dass sich lediglich ein Rad von der Fahrbahn abhebt. Die Erkennung des Sprungs setzt dabei darauf, dass wenigstens ein Rad abhebt und somit eine Drehbewegung, um die Querachse in der Fahrradmitte oder am Vorderrad, erzeugt wird. Wird nun durch geeignete Sensoren erkannt, dass diese Drehbewegung dazu führt, dass der Fahrer des Fahrrads nicht mehr sicher landen kann bzw. ein Überschlag nach hinten (Figur 1b) oder nach vorne (Figur 1c) zu erwarten ist, so werden Gegenmaßnahmen eingeleitet. Im Fall der Überschlagsneigung nach hinten, wie in der Figur 1b, kann das sich nach dem abheben noch drehende Rad gebremst werden, um somit das noch vorhandene Drehmoment des abgehobenen Hinterrads zu reduzieren oder vollständig abzubauen. Dadurch wird die Drehbewegung des gesamten Fahrrads ebenfalls reduziert. In der Figur 1b wird dadurch der zu große zu erwartende Winkel α1 zwischen der Fahrbahn und der Längsache des Fahrrads auf ein Maß α2 reduziert, welches eine sichere Landung ohne Sturz ermöglicht. Darüber hinaus ist jedoch auch sie Ansteuerung des abgehobenen Rades mittels eines Antriebs möglich, so dass ein Gegendrehmoment erzeugt wird, welches die Drehbewegung des Fahrrads reduziert oder kompensiert.

Entsprechend ist in Figur 1c die Situation dargestellt, dass der Fahrer bzw. das Fahrrad bei dem Sprung eine Überschlagsneigung nach vorne aufweist. Dies kann beispielsweise aufgrund einer ungünstigen Gewichtsverlagerung des Fahrers während des Sprungs erfolgen oder auch den Untergrundbedingungen des Absprungs geschuldet sein. Durch diese Überschlagsneigung nach vorne droht dem Fahrer ein Überschlag über den Lenker und somit ein Sturz, da der zu erwartende Winkel α1 bei der Landung größer als der für die Landung gerade noch sichere Winkel α2 ist. Indem in so einem Fall der Antrieb des Fahrrads aktiviert wird und auf das Hinterrad derart einwirkt, dass dort ein Drehmoment erzeugt wird, welches der Drehbewegung des Fahrrads entgegen wirkt, kann auch hier die Ausrichtung des Fahrrads kompensiert und somit ein Sturz verhindert werden.

In der Figur 2 ist eine erfindungsgemäße Vorrichtung 100 dargestellt, die die vorstehende Kompensation der Drehbewegung und somit eine Überschlagsverhinderung erzeugt. Die Vorrichtung weist dabei eine Verarbeitungseinheit 110 und einen damit verbundenen Speicher 120 auf, in dem beispielsweise Schwellenwerte für kritische Drehbewegungen abgespeichert sind. Diese Schwellenwerte können fest abgespeichert sein und/oder vom Fahrer appliziert werden. Die Verarbeitungseinheit 110 liest wenigstens die Sensorsignale eines am Fahrrad befindlichen Sensors ein, um daraus das Abheben des Fahrrads und/oder die Drehbewegung bzw. eine kritische Drehbewegung zu erkennen. Dabei sind beispielsweise die Sensorsignale eines Beschleunigungssensors 130, eines Drehratensensors 140, eines Neigungssensors bzw. Lagesensors 150 oder eines anderes geeigneten Sensors 160 wie beispielsweise eines oder mehrerer Drucksensoren, ein Ultraschallsensor oder ein Abstandssensor geeignet. Ausgehend von den erfassten Sensorsignalen und einer erkannten Drehbewegung, die zu einem Überschlag bzw. zu einem Sturz führen können, wird der Motor 170 und/oder eine Bremsvorrichtung 180 des Fahrrads angesteuert, um die Drehbewegung des gesamten Fahrrads zu beeinflussen. Wie vorstehend bereits ausgeführt, kann das u.a. dadurch geschehen, dass durch den Motor ein kompensierendes Gegendrehmoment erzeugt wird.

Ein mögliches erfindungsgemäße Verfahren zur Erkennung der Gefahr eines Überschlags sowie zur Vermeidung eines Sturzes, wie es auch in einer Vorrichtung 100 nach Figur 2 ablaufen kann, wird im Folgenden anhand des Flussdiagramms der Figur 3 beschrieben. Das Verfahren bzw. der Algorithmus kann dabei permanent aktiv sein oder aufgrund der Erkennung eines Sprungs, z.B. durch die Erfassung des Abhebens eines Rades, z.B. wie im Schritt 200, gestartet werden. Nach dem Start des Algorithmus wird im Schritt 200 ein Sprung des Fahrrads erkannt, z.B. indem ein Beschleunigungssensor, ein Lage-/Neigungs-/Zustandssensor, ein Ultraschallsensor oder auch ein Drucksensor das Abheben wenigstens eines Rades erkennt, ggf. indem ein Abgleich mit einem anderen Sensorsignal erfolgt. Sollte in diesem Schritt 200 kein Abheben erkannt werden, so kann das Verfahren beendet werden oder erneut mit dem Schritt 200 durchlaufen werden. Nach der Erkennung eines Sprungs bzw. eines Abhebens wenigstens eines Rades wird im Schritt 210 erfasst, ob eine Drehbewegung des Fahrrads vorliegt und wie groß diese Drehbewegung ist. Diese Erkennung kann beispielsweise über die Erfassung eines zumindest in zwei Richtungen messenden Beschleunigungssensors, eines Drehratensensors, eines Lage-/Neigungs-/Zustandssensors oder eines anderen hierfür geeigneten Sensors erfolgen. Denkbar ist beispielsweise auch, dass die Sensorsignale zweier Sensoren miteinander verarbeitet werden, um die Drehbewegung und deren Größe zu erkennen. So kann aus der Verwendung zweier Drucksensoren, die am vorderen und hinteren Ende des Fahrrads angebracht sind, eine Druckdifferenz abgeleitet werden, die sich bei einer Drehung um die Querachse nach vorne oder hinten entsprechend verändert. Notwendig ist dabei jedoch, dass die Steuereinheit 110, die diese Sensorsignale auswertet, eine Information über den Einbauort der Sensoren aufweist, um die Bewertung und Ableitung der Dreherkennung richtig vornehmen zu können. Zusätzlich kann in Schritt 210, ebenso wie im nachfolgenden Schritt 220, die Absolutgeschwindigkeit, die Vertikalbeschleunigung und/oder die Seitenneigung des Fahrrads berücksichtig werden, um die Drehbewegung bzw. einen drohenden Sturz abzuleiten.

Im nachfolgenden Schritt 220 wird die so erfasste Drehbewegung daraufhin untersucht, ob aufgrund der vorliegenden Datenlage ein Sturz bzw. ein Überschlag nach vorne oder hinten zu befürchten ist. Dies kann beispielsweise davon abhängig gemacht werden, ob die Drehbewegung eine bestimmte kritische Größe in Form eines Schwellenwerts übersteigt. Hierbei ist auch denkbar, dass die Zeit berücksichtigt wird, in der sich das Fahrrad oder zumindest das eine abhebende Rad bereits in der Luft befindet, um daraus die bereits durchgeführt oder noch zu erwartende Drehbewegung abzuleiten. Wird kein Sturz oder Überschlag erkannt bzw. ist die Neigung dazu, dass ein Sturz oder ein Überschlag zu befürchten ist, nicht gegeben, so kann das Verfahren abgebrochen oder erneut mit Schritt 200 gestartet werden. Wird jedoch aufgrund der Datenlage ein möglicher Sturz oder ein Überschlag erkannt, wird in Schritt 230 festgestellt, ob eine Überschlag nach vorne oder nach hinten zu erwarten ist. Diese Feststellung kann aufgrund der bereits vorliegenden Sensordaten bzw. der Auswertungen vorgenommen werden oder alternativ mit einem weiteren Sensor erfasst werden.

In Abhängigkeit von der Feststellung, in welche Richtung der drohende Überschlag stattfindet können im Schritt 240 geeignete Gegenmaßnahmen eingeleitet werden. Für den Fall, dass ein Überschlag nach vorne über den Lenker droht, kann der Motor derart angesteuert werden, dass das abgehobene angetriebene Rad (im Fall der Figur 1c das Hinterrad) ein Gegendrehmoment zur Drehbewegung des Fahrrads erzeugt. Durch dieses zusätzliche Drehmoment wird die Drehbewegung des Fahrrads reduziert, so dass der Winkel zwischen der Fahrbahn und der Längsachse des nicht zu groß wird. Unter Umständen kann mit dem Gegendrehmoment sogar ein bereits zu großer vorliegender Winkel reduziert werden, um eine sicherere Landung zu ermöglichen. Ein entsprechender Antrieb des abgehobenen Rades kann jedoch auch bei einem drohenden Überschlag nach hinten erfolgen, indem das Gegendrehmoment die Drehbewegung ebenfalls kompensiert (siehe Figur 1b).

Sollte dagegen das Fahrrad keinen zusätzlichen Antrieb haben oder der Antrieb während der Überschlagsneigungserkennung nicht zur Verfügung stehen, so kann auch eine Bremsvorrichtung angesteuert werden, welche die Drehbewegung des abgehobenen Rades reduziert oder abbaut. Da auch hierbei die Gesamtdrehbewegung des Fahrrads reduziert wird, kann so der drohende zu große Winkel zwischen Fahrbahn und Längsachse des Fahrrads bei der Landung reduziert werden.

Wird in Schritt 250 erkannt, dass das Fahrrad nach einem Sprung wieder gelandet ist, kann das Verfahren beendet werden oder mit dem Schritt 200 erneut durchlaufen werden. Die Erkennung, inwieweit der vorherig erkannte Sprung beendet ist, kann analog zur Erfassung bzw. Erkennung des Sprungs in Schritt 200 erfolgen. So ist denkbar, dass ein Beschleunigungssensor, Drehratensensor und/oder Lage-/Neigungs-/Zustandssensor eine normale Bewegung auf dem Fahrbahnuntergrund detektiert.

Prinzipiell kann optional die Ansteuerung des Motors oder der Bremsvorrichtung solange erfolgen, bis das Fahrrad wieder sicher auf dem Boden aufgekommen ist. Hierzu wird entsprechend des Schritts 250 solange mit dem Schritt 240 weiterverfahren, bis eine stabile Fahrtätigkeit auf dem Boden erkannt wird. Alternativ kann es jedoch auch nur zu kurzen Ansteuerung im Schritt 240 kommen, deren Wirkung nach dem erneuten Durchlauf des Verfahrens erneut überprüft wird.

Optional kann in Schritt 240 zur Korrektur des Sprungs bzw. der Fluglage die Ansteuerung des Antriebs bzw. der Brems ein Bahängigkeit von der Absolutgeschwindigkeit, der Vertikalbeschleunigung und der Seitenneigung des Fahrrads durchgeführt werden.

In einem weiteren Ausführungsbeispiel ist möglich, dass dem Fahrer des Fahrrads ein Hebel zur Verfügung steht, mittels dem eine gewollte Umdrehung , d.h. eine vollständige 360° Drehung um die Querachse des Fahrrads unterstützt wird. Durch die zusätzliche Erzeugung eines Drehmoments an wenigstens einem der abhebenden Räder in die gleiche Richtung wie die Drehung des Fahrrads kann so die Drehung schneller durchgeführt werden, indem das erzeugte Drehmoment additiv auf das durch den Sprung erzeugte Drehmoment aufaddiert wird. Der Hebel kann dabei als Softwarelösung in einer Ansteuerung des Antriebs realisiert sein.

Es sei darauf hingewiesen, dass in der vorstehenden Beschreibung unter dem Begriff Überschlag auch ein teilweiser Überschlag verstanden werden soll. Weiterhin sei angemerkt, dass die Erfassung der Drehung des Fahrrads um die Querachse nicht auf die Achse in der Fahrradmitte beschränkt sein soll, sondern auch jede andere Drehachse, senkrecht zur Seitenfläche des Fahrrads darunter zu verstehen ist. Weiterhin soll als Überschlagsneigung generell die Tendenz zu verstehen sein, dass eine vertretbare Gefahr besteht, dass ein Überschlag des Fahrrads entweder nach vorne oder nach hinten vorkommen kann. Somit ist die Reduzierung der Überschlagsneigung damit verbunden, dass die Gefahr durch das Eingreifen, z.B. durch die Erzeugung eines Gegendrehmoments, reduziert wird. Ein vollständiges Ausschalten der Gefahr der Überschlagsneigung kann nicht garantiert werden, da z.B. der Fahrer durch sein Verhalten während des Sprungs ein zusätzliches, nicht durch das erfindungsgemäße Verfahren zu kompensierendes Gefahrenpotential hinzufügen kann.

## Patentansprüche

1. Verfahren zur Sturzverhinderung bei einem Sprung mit einem Zweirad, insbesondere einem Fahrrad, mit den Schritten
• Erkennung (200) eines Sprungs des Zweirads durch die Erfassung des Abhebens wenigstens eines Rades des Fahrrads, und
• Erkennung (210, 220) einer Überschlagsneigung des Zweirads und
• Erzeugung (240) eines Gegendrehmoments an wenigstens einem der abhebenden Räder zur Reduzierung der Überschlagsneigung.

2. Verfahren nach Anspruch 1, **dadurch gekennzeichnet, dass** das Gegendrehmoment durch die Ansteuerung (240) eines, elektrischen Antriebs des Zweirads erzeugt wird, welches eine Drehbewegung des wenigstens einen abhebenden Rades erzeugt.

3. Verfahren nach Anspruch 1, **dadurch gekennzeichnet, dass** das Gegendrehmoment durch die Reduzierung der Drehbewegung des abhebenden Rades erzeugt wird, indem die Ansteuerung (240) eines elektrischen Antriebs des Zweirads, welches auf das abhebende Rades wirkt, reduziert oder beendet wird.

4. Verfahren nach Anspruch 1, **dadurch gekennzeichnet, dass** das Gegendrehmoment durch die Ansteuerung einer Bremsvorrichtung des Zweirads erzeugt wird, welches eine Drehbewegung des wenigstens einen abhebenden Rades zumindest reduziert.

5. Verfahren nach einem der vorhergehenden Ansprüche, **dadurch gekennzeichnet, dass** der sprung und/oder die Überschlagsneigung in Abhängigkeit wenigstens eines Beschleunigungssignals, eines Drucksignals, eines Neigungssignals, eines Lagesensors, eines Gierratensignals und/oder eines Gewichtssignals erkannt wird.

6. Verfahren nach einem: der vorhergehenden Ansprüche, **dadurch gekennzeichnet, dass** das Gegendrehmoment in Abhängigkeit der Überschreibung eines Schwellenwerts der Überschlagsneigung erzeugt wird, wobei insbesondere vorgesehen ist, dass der Schwellenwert eine kritische Neigung und/oder Drehung um die Querachse repräsentiert.

7. Vorrichtung (100) zur Erzeugung eines Gegendrehmoments an einem Zweirad bei einem erkannten Sprung, insbesondere bei einem Fahrrad, mit einer Steuereinheit (110) zur Verarbeitung von Sensorsignalen, wobei die Steuereinheit (110) in Abhängigkeit von den Sensorsignalen
• das Abheben wenigstens eines Rades des Zweirads erkennt und
• eine Überschlagsneigung erkennt, und
**dadurch gekennzeichnet, dass** die Steuereinheit (110)
• einen Antrieb (170) und/oder eine Bremsvorrichtung (180) des Zweirads zur Erzeugung eines Gegendrehmoment an dem abhebenden Rad zur Reduzierung der Überschlagsneigung ansteuert.

8. Vorrichtung (100) nach Anspruch 7, **dadurch gekennzeichnet, dass** die Steuereinheit (110) das Abheben des Rades, einen Sprung des Zweirads und/oder die Überschlagsneigung in Abhängigkeit wenigstens einer Beschleunigungsgröße, einer Druckgröße, einer Neigungsgröße, einer Lagegröße, einer Gierratengröße und/oder einer Gewichtsgröße erkannt wird.

9. Vorrichtung (100) nach Anspruch 7 oder 8, **dadurch gekennzeichnet, dass** die Steuereinheit (110) das Ansteuersignal zur Erzeugung des Gegendrehmoments in Abhängigkeit der Überschreibung eines Schwellenwerts der Überschlagsneigung erzeugt, wobei insbesondere vorgesehen ist, dass der Schwellenwert eine kritische Neigung und/oder Drehung um die Querachse repräsentiert.

10. Vorrichtung (100) nach einem der Ansprüche 7 bis 9, **dadurch gekennzeichnet, dass** die Bremsvorrichtung (180) an dem abhebenden Rad derart aktiviert wird, dass das Drehmoment, welches die Drehbewegung des Zweirads erzeugt und/oder unterstützt, reduziert oder abgebaut wird.

## Claims

1. Method for preventing a two-wheeled vehicle, in particular a cycle, from falling when making a jump, having the steps
• detecting (200) a jump of the two-wheeled vehicle by sensing the lifting off of at least one wheel of the cycle, and
• detecting (210, 220) a tendency of the two-wheeled vehicle to roll over, and
• generating (240) a counter-torque at at least one of the lifting-off wheels in order to reduce the tendency to roll over.

2. Method according to Claim 1, **characterized in that** the counter-torque is generated by the actuation (240) of an electric drive of the two-wheeled vehicle, which counter-torque generates a rotational movement of the at least one lifting-off wheel.

3. Method according to Claim 1, **characterized in that** the counter-torque is generated by reducing the rotational movement of the lifting-off wheel by reducing or ending the actuation (240) of an electric drive of the two-wheeled vehicle which acts on the lifting-off wheel.

4. Method according to Claim 1, **characterized in that** the counter-torque is generated by actuating a brake device of the two-wheeled vehicle, which counter-torque at least reduces a rotational movement of the at least one lifting-off wheel.

5. Method according to one of the preceding claims, **characterized in that** the jump and/or the tendency to roll over is detected as a function of at least one acceleration signal, one pressure signal, one inclination signal, one position sensor, one yaw rate signal and/or one weight signal.

6. Method according to one of the preceding claims, **characterized in that** the counter-torque is generated as a function of a threshold value of the tendency to roll over being exceeded, wherein in particular there is provision that the threshold value represents a critical tendency and/or rotation about the transverse axis.

7. Device (100) for generating a counter-torque at a two-wheeled vehicle when a jump is detected, in particular in the case of a cycle, having a control unit (110) for processing sensor signals, wherein the control unit (110) detects
• the lifting off of at least one wheel of the two-wheeled vehicle and
• a tendency to roll over, as a function of the sensor signals, and
**characterized in that** the control unit (110)
• actuates a drive (170) and/or a brake device (180) of the two-wheeled vehicle to generate a counter-torque at the lifting-off wheel in order to reduce the tendency to roll over.

8. Device (100) according to Claim 7, **characterized in that** the control unit (110) is detected the lifting off of the wheel, a jump of the two-wheeled vehicle and/or the tendency to roll over as a function of at least one acceleration variable, one pressure variable, one inclination variable, one position variable, one yaw rate variable and/or a weight variable.

9. Device (100) according to Claim 7 or 8, **characterized in that** the control unit (110) generates the actuation signal to generate the counter-torque as a function of the overwriting of a threshold value of the tendency to roll over, wherein in particular there is provision that the threshold value represents a critical inclination and/or rotation about the transverse axis.

10. Device (100) according to one of Claims 7 to 9, **characterized in that** the brake device (180) is activated at the lifting-off wheel in such a way that the torque which generates and/or assists the rotational movement of the two-wheeled vehicle is reduced or eliminated.

## Revendications

1. Procédé de protection antichute en cas de saut avec un deux-roues, en particulier un vélo, comprenant les étapes suivantes :
- reconnaissance (200) d'un saut du deux-roues par détection du soulèvement d'au moins une roue du vélo, et
- reconnaissance (210, 220) d'une tendance au retournement du deux-roues et
- génération (240) d'un couple opposé au niveau d'au moins l'une des roues se soulevant pour réduire la tendance au retournement.

2. Procédé selon la revendication 1, **caractérisé en ce que** le couple opposé est généré par la commande (240) d'un entraînement électrique du deux-roues, qui génère un mouvement de rotation de l'au moins une roue se soulevant.

3. Procédé selon la revendication 1, **caractérisé en ce que** le couple opposé est généré par la réduction du mouvement de rotation de la roue se soulevant, par le fait que la commande (240) d'un entraînement électrique du deux-roues, qui agit sur la roue se soulevant, est réduite ou terminée.

4. Procédé selon la revendication 1, **caractérisé en ce que** le couple opposé est généré par la commande d'un dispositif de freinage du deux-roues qui réduit au moins un mouvement de rotation de l'au moins une roue se soulevant.

5. Procédé selon l'une quelconque des revendications précédentes, **caractérisé en ce que** le saut et/ou la tendance au retournement est détectée en fonction d'au moins un signal d'accélération, d'un signal de pression, d'un signal d'inclinaison, d'un capteur de position, d'un signal de vitesse de lacet et/ou d'un signal de poids.

6. Procédé selon l'une quelconque des revendications précédentes, **caractérisé en ce que** le couple opposé est généré en fonction du dépassement d'une valeur seuil de la tendance au retournement, le procédé prévoyante notamment que la valeur seuil représente une inclinaison critique et/ou une rotation critique autour de l'axe transversal.

7. Dispositif (100) de génération d'un couple opposé au niveau d'un deux-roues en cas de détection d'un saut, en particulier pour un vélo, comprenant une unité de commande (110) pour traiter les signaux de capteur, l'unité de commande (110) détectant, en fonction des signaux de capteur,
- le soulèvement d'au moins une roue du deux-roues et
- une tendance au retournement et
**caractérisé en ce que** l'unité de commande (110)
- commande un entraînement (170) et/ou un dispositif de freinage (180) du deux-roues pour générer un couple opposé au niveau de la roue se soulevant afin de réduire la tendance au retournement.

8. Dispositif (100) selon la revendication 7, **caractérisé en ce que** l'unité de commande (110) est détecté le soulèvement de la roue, un saut du deux-roues et/ou la tendance au retournement en fonction d'au moins une grandeur d'accélération, d'une grandeur de pression, d'une grandeur d'inclinaison, d'une grandeur de position, grandeur de vitesse de lacet et/ou d'une grandeur de poids.

9. Dispositif (100) selon la revendication 7 ou 8, **caractérisé en ce que** l'unité de commande (110) génère le signal de commande pour générer le couple opposé en fonction de l'écrasement d'une valeur seuil de la tendance au retournement, le procédé prévoyant notamment que la valeur seuil représente une inclinaison critique et/ou une rotation critique autour de l'axe transversal.

10. Dispositif (100) selon l'une quelconque des revendications 7 à 9, **caractérisé en ce que** le dispositif de freinage (180) au niveau de la roue se soulevant est activé de telle sorte que le couple qui génère et/ou supporte le mouvement de rotation du deux-roues soit réduit ou annulé.
